# EUROPÄISCHE PATENTSCHRIFT

(11) **EP 2 324 217 B1**
(45) Veröffentlichungstag und Bekanntmachung des Hinweises auf die Patenterteilung: **16.05.2012**
(21) Anmeldenummer: 09781864.5
(22) Anmeldetag: 14.08.2009
(51) Int. Cl.: F01N 3/28, F01N 5/02, B01J 19/24

(54) **KOMBINATION AUS WÄRMETAUSCHER UND KATALYSATOR ALS KOMPONENTE EINES ABGASSYSTEMS**
COMBINATION OF A HEAT EXCHANGER AND CATALYST AS A COMPONENT OF AN EXHAUST GAS SYSTEM
ASSOCIATION ÉCHANGEUR DE CHALEUR ET CATALYSEUR EN TANT QUE COMPOSANT D'UN SYSTÈME D'ÉCHAPPEMENT

(30) Priorität: 28.08.2008 DE 102008044711
(43) Veröffentlichungstag der Anmeldung: 25.05.2011
(73) Patentinhaber: Emitec Gesellschaft für Emissionstechnologie mbH, 53797 Lohmar (DE)
(72) Erfinder: SCHEPERS, Sven, 53844 Troisdorf (DE); BRÜCK, Rolf, 51429 Bergisch Gladbach (DE); LIMBECK, Sigrid, 53804 Much (DE)
(74) Vertreter: Rössler, Matthias
(86) Internationale Anmeldenummer: PCT/EP2009/060563
(87) Internationale Veröffentlichungsnummer: WO 2010/023118

(56) Entgegenhaltungen:
- WO-A-02/40838
- DE-A1- 10 031 347
- GB-A- 797 783
- US-A- 5 033 264
- US-B1- 6 564 545
- US-B1- 6 584 760

## Beschreibung

Die vorliegende Erfindung betrifft die Kombination eines Wärmetauschers und eines Katalysators in einem gemeinsamen Gehäuse als Komponente eines Abgassystems. Diese Komponente dient insbesondere der Rückgewinnung von Energie aus dem Abgasstrom und einer Optimierung des light-off Verhaltens des in dem Gehäuse vorgesehenen Katalysators.

Abgas aus einer Verbrennungskraftmaschine eines Kraftfahrzeuges besitzt thermische Energie, welche z. B. mittels eines thermoelektrischen Generators in elektrische Energie umgewandelt werden kann, um bspw. eine Batterie oder einen anderen Energiespeicher zu füllen oder elektrischen Verbrauchern die benötigte Energie direkt zuzuführen. Damit steht für den Betrieb des Kraftfahrzeuges Energie in größerem Umfang zur Verfügung. Ein solcher thermoelektrischer Generator weist eine Mehrzahl thermoelektrischer Wandlerelemente auf. Thermoelektrische Materialien sind von einer Art, dass diese effektiv thermische Energie in elektrische Energie umwandeln können (Seebeck-Effekt) und umgekehrt (Peltier-Effekt). Der "Seebeck-Effekt" basiert auf dem Phänomen der Umwandlung von Wärmeenergie in elektrische Energie und wird zur Erzeugung thermoelektrischer Energie benutzt. Der "Peltier-Effekt" ist die Umkehrung des "Seebeck-Effekts" und ein Phänomen, welches mit Wärmeadsorption einhergeht und in Relation zu einem Stromfluss durch unterschiedliche Materialien verursacht wird. Der "Peltier-Effekt" ist bspw. zum thermoelektrischen Kühlen bereits vorgeschlagen worden.

Es ist bereits versucht worden, entsprechende thermoelektrische Generatoren für die Anwendung in Kraftfahrzeugen bereitzustellen. Diese waren jedoch meist sehr teuer in der Herstellung und gekennzeichnet durch einen relativ geringen Wirkungsgrad. Damit konnte noch keine Serientauglichkeit erlangt werden. Ein weiteres entscheidendes Merkmal ist die Baugröße von Komponenten zur Energierückgewinnung aus dem Abgas. Dabei soll bei möglichst geringer Baugröße ein Höchstmaß an Energie aus dem Abgasstrom zurück gewonnen werden. Gleichzeitig soll erreicht werden, dass zu allen Betriebspunkten des Verbrennungsmotors die einzelnen Komponenten des Abgasreinigungssystems möglichst schnell auf Betriebstemperatur gebracht werden, um eine weitgehende Umwandlung von Schadstoffen, die in dem Abgas enthalten sind, zu ermöglichen.

Aufgabe der vorliegenden Erfindung ist es demnach, die mit Bezug auf den Stand der Technik geschilderten Probleme zumindest teilweise zu lösen. Insbesondere soll eine Komponente eines Abgassystems angegeben werden, die einen möglichst hohen Wirkungsgrad hinsichtlich der Umwandlung von bereitgestellter thermischer Energie aus dem Abgas in thermische Energie eines Mediums des Wärmetauscher ermöglicht und weiter die Effektivität der Abgasreinigung der Komponente in allen Betriebspunkten der Verbrennungskraftmaschine steigert. Gleichzeitig soll eine möglichst kompakte Bauform erreicht werden.

Diese Aufgaben werden gelöst mit einer Vorrichtung gemäß den Merkmalen des Patentanspruchs 1. Vorteilhafte Ausgestaltungen der erfindungsgemäßen Komponente sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung weiter und führt ergänzende Ausführungsbeispiele der Erfindung an.

Die erfindungsgemäße Komponente eines Abgassystems einer Verbrennungskraftmaschine weist zumindest ein Gehäuse mit einem Einlass und einem Auslass für ein Abgas sowie zumindest einen Einlauf und einen Auslauf für ein Medium auf Weiter weist die Komponente einen von dem Abgas umströmbaren Wärmetauscher mit einer ersten thermischen Masse und einem von dem Abgas durchströmbaren Katalysatorkörper mit einer zweiten thermischen Masse auf, wobei der Wärmetauscher mindestens einen ersten Strömungspfad für das Medium aufweist und wobei Wärmetauscher und Katalysatorkörper in dem Gehäuse gemeinsam angeordnet sind.

Das im Wärmetauscher verwendete Medium ist insbesondere flüssig und bevorzugt im Wesentlichen Wasser, wobei insbesondere auch langkettige Kohlenwasserstoffverbindungen, also Öle bzw. Schmierstoffe, einsetzbar sind. Die Komponente zeichnet sich dadurch aus, dass Wärmetauscher und Katalysatorkörper voneinander unabhängige Baugruppen der Komponente darstellen, die dementsprechend voneinander getrennte thermische Massen bzw. voneinander getrennte Wärmeinhalte aufweisen. In diesem Zusammenhang wird der Wärmetauscher insbesondere durch Rohrsysteme gebildet, die von einem Medium durchströmt werden, so dass das Rohrsystem eine erste thermische Masse bildet und der Katalysatorkörper wird insbesondere durch wenigstens teilweise strukturierte Metallfolien gebildet, die gewickelt, geschlungen oder gestapelt sind und ihrerseits eine zweite thermische Masse definieren. Das Rohrsystem des Wärmetauschers ist insbesondere aufgebaut aus einer Vielzahl von miteinander verbundenen Rohren, die innerhalb des Gehäuses der Komponente angeordnet sind und von einem Medium entlang eines einzigen Strömungspfades oder entlang mehrerer Strömungspfade durchströmt werden. Der Wärmetauscher kann auch als einteiliges Element, z.B. als ein von dem Medium durchströmbares Wandelement, vorgesehen sein, das insbesondere Durchbrüche aufweist, und somit von dem Abgas umströmbar ist. In diesem Fall wird der Wärmetauscher von dem Medium entlang eines einzigen Strömungspfades durchströmt.

Durch die Anordnung von Katalysatorkörper und Wärmetauscher in einem Gehäuse kann durch die Ausnutzung der katalytisch erzeugten Wärme einerseits eine sehr hohe Effektivität des Wärmeübergangs erreicht werden, so dass ein Höchstmaß an thermischer Energie durch den Wärmetauscher abgeführt und gegebenenfalls außerhalb des Gehäuses der Komponente durch thermoelektrische Wandlerelemente in elektrische Energie umgewandelt werden kann. Gleichzeitig wird durch die Anordnung von Wärmetauscher und Katalysatorkörper in einem Gehäuse erreicht, dass das Abgas und/oder der Katalysatorkörper durch den Wärmetauscher erwärmt wird, so dass der Katalysatorkörper möglichst schnell und möglichst lange seine Betriebstemperatur oberhalb der light-off Temperatur erreichen bzw. erhalten kann. Die light-off Temperatur des Katalysatorkörpers ist als die Temperatur definiert, ab der die katalytische Beschichtung mit den Schadstoffen im Abgas reagiert.

Bei der erfindungsgemäßen. Komponente weist das Gehäuse eine Mittelachse und entlang der Mittelachse eine erste Stirnseite und eine zweite Stirnseite auf, wobei der Einlass für das Abgas an der ersten Stirnseite und der Auslass an der zweiten Stirnseite angeordnet ist. Dabei ist der Katalysatorkörper entlang der Mittelachse angeordnet und weist eine äußere Umfangsfläche und eine innere Umfangsfläche auf, die sich parallel zu der Mittelachse erstrecken, wobei die innere Umfangsfläche mit dem Einlass strömungstechnisch unmittelbar verbunden ist, so dass der Katalysatorkörper radial von der inneren Umfangsfläche zu der äußeren Umfangsfläche von dem Abgas durchströmbar ist. Der zumindest eine erste Strömungspfad des Wärmetauschers umgibt den Katalysatorkörper an der äußeren Umfangsfläche zumindest teilweise. Weiter ist ein Ringkanal an einer Innenwand des Gehäuses vorgesehen, der strömungstechnisch mit der äußeren Umfangsfläche des Katalysatorkörpers und unmittelbar mit dem Auslass verbunden ist und den Katalysatorkörper und den zumindest einen ersten Strömungspfad zumindest teilweise umgibt.

Der radial durchströmbare Katalysatorkörper der vorliegenden Erfindung entspricht insbesondere dem Aufbau der Radialkatalysatoren gemäß der WO-A1-02/40838 oder der WO-A1-02/81879, die hiermit vollumfänglich in Bezug genommen werden. Dabei können insbesondere auch Radialkatalysatoren mit Heizelementen eingesetzt werden, die gemäß einer besonders vorteilhaften Ausgestaltung das Kaltstart-Verhalten des Katalysatorkörpers verbessern können. Insbesondere ist ein solches Heizelement, z.B. in Form eines Heizkatalysators, stromaufwärts des Einlasses des Gehäuses angeordnet oder innerhalb des im Radialkatalysator vorhandenen Innenraums.

Neben dem einen Abgaseinlass und -auslass können natürlich mehrere Auslässe und Einlässe in dem Gehäuse vorgesehen sein. Der Katalysatorkörper ist bevorzugt zylindrisch ausgeführt und weist in seinem Inneren einen Hohlraum auf, durch den das Abgas vom Auslass des Gehäuses kommend einströmen kann. Dort wird das Abgas gegebenenfalls durch Lenkmittel umgelenkt, so dass es den Katalysatorkörper in radialer Richtung nach außen durchströmt über die äußere Umfangsfläche den Katalysatorkörper verlässt. Der zumindest eine erste Strömungspfad des Wärmetauschers ist bevorzugt unmittelbar an der äußeren Umfangsfläche des Katalysatorkörpers angeordnet. Bei einer Ausführung des Wärmetauschers als Rohrsystem verlaufen diese Rohre insbesondere in axialer Richtung parallel zur Mittelachse und sind gleichmäßig über der äußeren Umfangsfläche des Katalysatorkörpers verteilt angeordnet. Durch eine solche bevorzugte Anordnung des Wärmetauschers wird ein besonders großflächiger Wärmeaustauschabschnitt erzeugt, so dass eine möglichst große Menge der im Abgas verfügbaren thermischen Energie auf das Medium des Wärmetauschers übertragen wird. Der Wärmetauscher ist dabei bevorzugt innerhalb des Ringkanals angeordnet, der den Katalysatorkörper bevorzugt vollumfänglich umschließt und zwischen äußerer Umfangsfläche des Katalysatorkörpers und Innenwand des Gehäuses angeordnet ist. Der Ringkanal ist zum Abgaseinlass hin bevorzugt verschlossen ausgefiihrt, so dass das Abgas nach dem Ausströmen aus dem Katalysatorkörper über den Ringkanal bei vorheriger oder/und gleichzeitiger Umströmung des Wärmetauschers in Richtung Abgasauslass abgeführt wird. Dabei sind das Gehäuse und der Wärmetauscher insbesondere mit Leitelementen für das Abgas versehen, so dass ein möglichst geringer Druckverlust in Folge von Verwirbelungen oder anderen Widerständen im Abgasstrom erreicht wird. Weiterhin kann der Wärmetauscher auch als flächiges Hohlelement aufgebaut sein, das insbesondere Durchbrüche aufweist, um so von dem Abgas durch- und umströmbar zu sein. Dabei können mehrere Schichten dieser wandförmigen Elemente auch in Kombination mit Rohrleitungen zwischen Katalysatorkörper und Gehäuse angeordnet sein.

Gemäß einer weiteren bevorzugten Ausgestaltung ist zumindest ein zweiter Strömungspfad vorgesehen, der den Katalysatorkörper wenigstens teilweise, und insbesondere über seine gesamte axiale Erstreckung, durchdringt. Der zweite Strömungspfad des Wärmetauschers kann dabei baugleich zu dem ersten Strömungspfad aufgebaut sein. Insbesondere ist er derart in dem Katalysatorkörper angeordnet, dass er innerhalb eines radial außen liegenden Abschnitts des Katalysators vorgesehen ist, so dass das Abgas vom Einlass des Gehäuses kommend einen ersten katalytisch aktiven Bereich des Katalysators überströmt und erst dann auf den zumindest einen zweiten Strömungspfad des Wärmetauschers trifft. Der Katalysatorkörper weist zur Aufnahme des zumindest einen zweiten Strömungspfades insbesondere Löcher bzw. Aussparungen auf, in die die vorgesehenen Bauformen des zweiten Strömungspfades eingesetzt werden können.

Bevorzugt ist weiter, dass der Wärmetauscher wenigstens zweistufig ausgeführt ist und der außerhalb des Katalysatorkörpers angeordnete zumindest eine erste Strömungspfad einer ersten Stufe und der den Katalysatorkörper durchdringende zumindest eine zweite Strömungspfad einer zweiten Stufe des Wärmetauschers zugeordnet ist. Eine Zweistufigkeit des Wärmetauschers bedeutet insbesondere, dass dieser über zwei Einläufe bzw. Ausläufe verfügt, durch die jeweils der zumindest eine erste bzw. eine zweite Strömungspfad separat mit einem Medium versorgt werden können. Dabei können die Medien unterschiedlich aber auch gleichartig ausgeführt sein. Durch diese bevorzugte Ausgestaltung wird erreicht, dass der Wärmetauscher insbesondere wenigstens zwei Temperaturbereiche für das Medium aufweist, der eine hervorgerufen durch die Anordnung des zumindest einen ersten Strömungspfades und der zweite Temperaturbereich durch die Anordnung des zumindest einen zweiten Strömungspfades. Die unterschiedlich temperierten Medien können dann im Bereich eines thermoelektrischen Generators den für den jeweiligen Temperaturbereich besonders geeigneten Wandlerelementen zugeführt werden. Somit wird der energetische Wirkungsgrad eines thermoelektrischen Generators bzw. der erfindungsgemäßen Komponente weiter erhöht. Gleichzeitig ist das benötigte Volumen des Mediums, das verwendet wird, um in kritischen Betriebspunkten der Verbrennungskraftmaschine dem Katalysatorkörper thermische Energie zuzuführen, sehr gering zu halten, da nur der zumindest eine zweite Strömungspfad des Wärmetauschers zum Aufheizen des Katalysatorkörpers genutzt wird. Eine Aufheizung und Durchströmung des zumindest einen ersten Strömungspfades durch ein erwärmtes Medium ist in diesem Fall nicht notwendig. Durch diese vorteilhafte Ausgestaltung kann eine möglichst schnelle Aufheizung und damit Betriebsfähigkeit des Katalysatorkörpers zu erreicht werden.

Gemäß einer weiteren besonders vorteilhaften Ausgestaltung der Komponente können die im Bereich des zweiten Strömungspfades angeordneten Katalysatorzonen auch geringere spezifische Wärmekapazitäten aufweisen, so dass diese sich ggf. durch das Medium schneller erwärmen und damit eine Betriebsfähigkeit des Katalysators in kürzerer Zeit ermöglichen.

Der zweite Strömungspfad des Wärmetauschers kann gemäß einer weiteren vorteilhaften Ausgestaltung der Komponente auch als ein in sich geschlossenes Volumen ohne Einlauf und Auslauf für ein Medium aufgebaut sein. Bei einer derartigen Weiterbildung ist der zweite Strömungspfad mit einem Phasenwechsel-Material befüllt, dass als Latentwärmespeicher für den Katalysatorkörper wirken kann. Bei Erwärmung des in dem zweiten Strömungspfad vorgesehenen Phasenwechselmaterials wird dieses durch die Aufnahme einer bestimmten Wärmemenge den Phasenzustand, z. B. von fest zu flüssig, verändern. Ein Absinken der Temperatur des Katalysatorkörpers unter die light-off Temperatur infolge von ungünstigen Betriebspunkten der Verbrennungskraftmaschine und insbesondere beim Kalt-Start, kann dann durch eine Wärmeabgabe des Phasenwechsel-Materials infolge des erneuten Phasenwechsels, z. B. von flüssig zu fest, kompensiert werden. Der Katalysatorkörper wird aufgeheizt und bleibt oberhalb der light-off Temperatur. Bei einer derartigen Ausgestaltung ist innerhalb des zweiten Strömungspfades ein Kompensationsvolumen vorzusehen, der die Volumenänderung des Mediums infolge des Phasenwechsels aufnehmen kann.

Gemäß einer weiteren vorteilhaften Ausgestaltung der Komponente weist der Katalysatorkörper gegenüber dem zumindest einen zweiten Strömungspfad des Wärmetauschers zumindest ein erstes Kompensationselement auf, das eine Ausdehnung des Katalysatorkörpers in radialer Richtung ermöglicht. Damit sind hier insbesondere Aussparungen gemeint, die eine Ausdehnung des Katalysatorkörpers in radialer Richtung aufnehmen können, ohne die zweiten Strömungspfade des Wärmetauschers mit Druckspannungen zu belasten oder diese zu verschieben. Neben Aussparungen können auch Strukturen in den wenigstens teilweise strukturierten Metallfolien des Katalysatorkörpers vorgesehen sein, die eine radiale Ausdehnung des Katalysatorkörpers infolge der thermischen Beanspruchung durch Biegung oder ein gewisses Maß an Kompressibilität kompensieren können.

Gemäß einer bevorzugten Ausgestaltung der Komponente weist der Katalysatorkörper zumindest ein zweites Kompensationselement auf, das eine Ausdehnung des Katalysatorkörpers in axialer Richtung ermöglicht. Diese zweiten Kompensationselemente sind insbesondere dazu geeignet, die Ausdehnung des Katalysatorkörpers in axialer Richtung derart zu kompensieren, dass die vorgesehenen Strömungswege des Abgases eingehalten werden. Weiterhin sollen durch diese zweiten Kompensationselemente ebenfalls Zug- oder Druckspannungen, die auf erste oder zweite Strömungspfade übertragen werden könnten, vermieden werden. Die zweiten Kompensationselemente sind insbesondere in Halteelemente integriert, die erste und/oder zweite Strömungspfade in ihrer Position im Gehäuse, insbesondere in radialer Richtung, fixieren. Dazu können die Verbindungen der zweiten Kompensationselemente zu dem ersten Strömungspfad und/oder zu dem zweiten Strömungspfad als Schiebesitze ausgeführt sein. Gemäß einer anderen vorteilhaften Weiterbildung sind die zweiten Kompensationselemente in dem ersten und/oder zweiten Strömungspfad integriert. Dazu können insbesondere die in Form von Rohrleitungen aufgebauten Strömungspfade Biegungen oder z.B. omega-förmige Verschränkungen aufweisen, die eine axiale Beweglichkeit zulassen und damit eine Ausdehnung des Katalysatorkörpers in axialer Richtung kompensieren. In diesem Fall können die Halteelemente, die Katalysatorkörper und Strömungspfade zueinander fixieren, auch in axialer Richtung fest ausgeführt sein.

Gemäß einer weiteren vorteilhaften Ausgestaltung weist der zumindest eine erste Strömungspfad und/oder der zumindest eine zweite Strömungspfad eine katalytisch aktive Beschichtung auf. Zusätzlich können auch Bereiche der Innenwand des Gehäuses oder Bereiche des Ringkanals mit einer katalytisch aktiven Beschichtung versehen sein, so dass einerseits eine möglichst vollständige Umsetzung der Schadstoffe im Abgas erreicht wird und andererseits eine möglichst große Menge an thermischer Energie infolge der exothermen katalytischen Reaktion des Abgases an den Wärmetauscher abgeführt werden kann. Gegebenenfalls ist auf eine Beschichtung der Strömungspfade zu verzichten, wenn der Wärmeübergang durch die katalytische Beschichtung verschlechtert wird.

Für die katalytisch aktive Beschichtung des Katalysatorkörpers bzw. der weiteren Bereiche der Komponente sind bevorzugt Beschichtungen für Oxidationskatalysatoren vorgesehen. In dem Katalysatorkörper wird in Folge der katalytischen Umsetzung von Bestandteilen des Abgases eine exotherme Reaktion erzeugt, die die thermische Energie im Abgas erhöht. Diese nochmals erhöhte thermische Energie des Abgases wird durch das Medium über den Wärmetauscher abgeführt und in vorteilhafter Weise außerhalb der Komponente in elektrische Energie umgewandelt. Der Katalysatorkörper und die weiteren Bereiche können ggf. mit verschiedenen Beschichtungen und/oder Katalysatoren ausgeführt sein.

Die Erfindung findet ganz bevorzugt Anwendung in einem Kraftfahrzeug, insbesondere in einem Personenkraftfahrzeug.

Gemäß einer weiteren bevorzugten Ausgestaltung ist ein Verfahren zum Betrieb einer erfindungsgemäßen Komponente vorgesehen, wobei der Wärmetauscher zumindest zeitweise als Heizelement für den Katalysatorkörper eingesetzt wird.

Die Erfindung sowie das technische Umfeld werden anhand der beigefügtenschematischen Figuren veranschaulicht. Es ist darauf hinzuweisen, dass die Figuren besonders bevorzugte Ausführungsvarianten zeigen, die Erfindung jedoch nicht darauf beschränkt ist. Es zeigen (schematisch):
- Fig. 1:: eine erste Ausführungsvariante der Komponente in einer Seitenansicht,
- Fig. 2:: einen Querschnitt der ersten Ausführungsvariante der Komponente,
- Fig. 3:: eine Metallfolie des Katalysatorkörpers und
- Fig. 4:: die Integration der Komponente in ein Kraftfahrzeug.

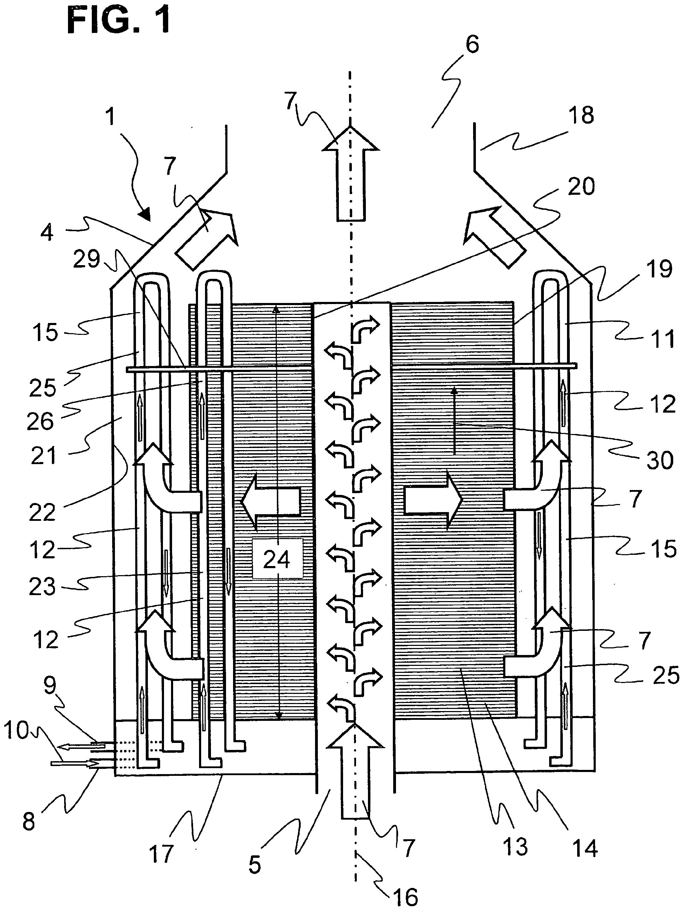

Fig. 1 stellt eine erste Ausführungsvariante der Komponente 1 in einer Seitenansicht dar. Die Komponente 1 weist ein Gehäuse 4 auf mit einer ersten Stirnseite 17 und einer zweiten Stirnseite 18. An der ersten Stirnseite 17 ist ein Einlass 5 für das Abgas 7 angeordnet, durch den das Abgas 7 in einen Hohlraum des Katalysatorkörpers 13 vordringt. An der zweiten Stirnseite 18 des Gehäuses 4 der Komponente 1 ist der Auslass 6 für das Abgas 7 vorgesehen. Der Katalysatorkörper 13 erstreckt sich parallel und konzentrisch zu einer Mittelachse 16 des Gehäuses 4 der Komponente 1 und ist hier als radial durchströmbarer Katalysatorkörper 13 dargestellt. Das Abgas 7 wird im Inneren des Katalysatorkörpers 13 umgelenkt und strömt über eine innere Umfangsfläche 20 in die Wabenkörperstruktur des Katalysatorkörpers 13 ein. Das Abgas 7 durchströmt den Katalysatorkörper 13 in radialer Richtung und strömt über eine äußere Umfangsfläche 19 aus dem Katalysatorkörper aus und trifft in dem Ringkanal 21 auf den Wärmetauscher 11, der in der rechten Hälfte des Bildes durch den ersten Strömungspfad 15 dargestellt ist. Der Katalysatorkörper 13 weist hierbei eine zweite thermische Masse 14 auf und der Wärmetauscher 11 eine erste thermische Masse 12. Der Wärmetauscher 11 ist in einer Ausführung als Rohrleitung dargestellt, die von dem Medium 10 durchströmt wird. Die Rohrleitungen dieses ersten Strömungspfades 15 sind hier so ausgelegt, dass unabhängig von der Anordnung des Einlaufs 8 und Auslaufs 9 eine gleichmäßige Durchströmung der Rohrleitungen über das gesamte Volumen des Wärmetauschers 11 erreicht wird und somit ein optimaler Wärmeaustausch zwischen Medium 10 und Abgas 7 ermöglicht wird. Das Abgas 7 wird im Bereich des Wärmetauschers 11 im Ringkanal 21 umgelenkt und umströmt den Wärmetauscher 11 in Richtung des Auslasses 6 des Gehäuses 4. Der Ringkanal 21 wird durch die Innenwand 22 des Gehäuses 4 und durch die äußere Umfangsfläche 19 des Katalysatorkörpers 13 begrenzt. Der Ringkanal 21 ist zur ersten Stirnseite 17 des Gehäuses 4 geschlossen und zur zweiten Stirnseite 18 offen ausgeführt, so dass das Abgas 7 über den Ringkanal 21 in Richtung des Auslasses 6 des Gehäuses 4 strömt.

In der linken Bildhälfte der Fig. 1 ist die Ausführungsform des Wärmetauschers 11 mit einem ersten Strömungspfad 15 und einem zweiten Strömungspfad 23 dargestellt. Dabei ist der zweite Strömungspfad 23 im Wesentlichen innerhalb des Katalysatorkörpers 13 angeordnet. Der erste Strömungspfad 15 ist mit einem Einlauf 8 verbunden, durch den das Medium 10 eingeleitet wird. Das Medium 10 verlässt nach Durchströmung des ersten Strömungspfads 15 über den Auslauf 9 das Gehäuse 4. Der Einlauf 8 und Auslauf 9 für den zweiten Strömungspfad 23 ist in Fig. 1 nicht dargestellt. Dieser kann einen separaten Einlauf 8 und Auslauf 9 aufweisen oder auch mit dem Einlauf 8 und Auslauf 9 verbunden sein, so dass der zweite Strömungspfad 23 mit dem ersten Strömungspfad 15 parallel geschaltet ist.

Der Wärmetauscher 11 ist somit einstufig oder zumindest zweistufig betreibbar. Bei einer Parallelschaltung des ersten Strömungspfades 15 und des zweiten Strömungspfades 23 ist ein einstufiger Wärmetauscher 11 realisiert. Bei einer Ausführung des Wärmetauschers 11 mit separatem Einlauf 8 und Auslauf 9 für einerseits den ersten Strömungspfad 15 und andererseits zumindest den zweiten Strömungspfad 23 ist ein zweistufiger Wärmetauscher realisiert, der insbesondere unterschiedlich temperierte Medien 10 einem Thermoelektrischen Generator zuführen kann, so dass Thermoelemente mit höchsten Wirkungsgraden für jeweils unterschiedliche Temperaturbereiche möglichst effizient genutzt werden. Dabei wird durch den ersten Strömungspfad 15 eine erste Stufe 25 und durch den zweiten Strömungspfad 23 eine zweite Stufe 26 des Wärmetauschers 11 gebildet.

Weiter weist die Komponente 1 zweite Kompensationselemente 29 auf, die insbesondere Bestandteile des Katalysatorkörpers 13 sind und der Fixierung des ersten Strömungspfades 15 und/oder des zweiten Strömungspfades 23 dienen. Diese zweiten Kompensationselemente 29 sind insbesondere geeignet, eine Ausdehnung des Katalysatorkörpers 13 in axialer Richtung 30 infolge der thermischen Beanspruchung zu kompensieren, indem sie insbesondere kompressibel ausgeführt sind.

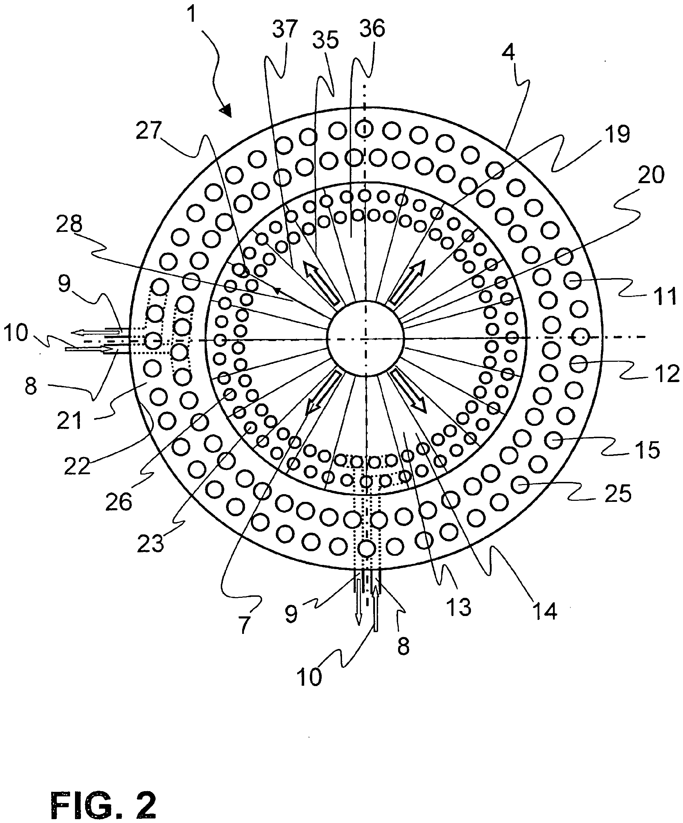

Fig. 2 zeigt schematisch einen Querschnitt der ersten Ausführungsvariante der Komponente 1. Hier ist insbesondere dargestellt, dass das Abgas 7 in radialer Richtung 28 den Katalysatorkörper 13 durchströmt und dabei insbesondere durch Strukturen 37 der Metallfolie 35 des Katalysatorkörpers 13 in vorgegebenen Strömungskanälen 36 von der inneren Umfangsfläche 19 zur äußeren Umfangsfläche 20 des Katalysatorkörpers 13 geführt wird. In dieser Darstellung ist der Wärmetauscher 11 mit einem ersten Strömungspfad 15 und einem zweiten Strömungspfad 23 dargestellt, die zusammen eine erste thermische Masse 12 defmieren. Der Katalysatorkörper 13 weist eine zweite thermische Masse 14 auf. Das Abgas 7 durchströmt den Katalysatorkörper in radialer Richtung 28 und trifft bereits im Katalysatorkörper 13 auf den zweiten Strömungspfad 23 des Wärmetauschers 11, der hier in rohrförmiger Ausgestaltung gezeigt ist. Dabei sind erste Kompensationselemente 27 vorgesehen, die eine Ausdehnung des Katalysatorkörpers 13 in radialer Richtung 28 ermöglichen bzw. kompensieren sollen. Diese ersten Kompensationselemente 27 können insbesondere als dargestellte Aussparungen ausgeführt sein oder aber als biegefähige oder kompressible Strukturelemente der Metallfolie 35. Das Abgas 7 strömt über die äußere Umfangsfläche 19 des Katalysatorkörpers 13 in den Ringkanal 21 und umströmt hier den ersten Strömungspfad 15 des Wärmetauschers 11 und wird weiter durch den Ringkanal 21, der insbesondere durch Innenwand 22 des Gehäuses 4 und äußerer Umfangsfläche 19 des Katalysatorkörpers 13 begrenzt ist, in Richtung Auslass 6 des Gehäuses 4 weitergeführt. Erster Strömungspfad 15 und zweiter Strömungspfad 23 sind hier in einer zweistufigen Ausführung des Wärmetauschers 11 dargestellt, wobei der erste Strömungspfad 15 als erste Stufe 25 mit einem Einlauf 8 und Auslauf 9 für ein Medium 10 vorgesehen ist und der zweite Strömungspfad 23 als zweite Stufe 26 ebenfalls mit einem Einlauf 8 und Auslauf 9 für ein Medium 10. Das für die erste Stufe 25 verwendete Medium 10 kann sich dabei insbesondere von dem in der zweiten Stufe 26 verwendeten Medium 10 dahingehend unterscheiden, dass es für den jeweiligen Temperaturbereich optimale Wärmeübergangs- und Wärmetransporteigenschaften aufweist. Die ersten Strömungspfade 15 bzw. zweiten Strömungspfade 23 sind jeweils untereinander verbunden und damit parallel geschaltet, so dass eine gleichmäßige Durchströmung des ersten Strömungspfades 15 und des zweiten Strömungspfades 23 über das gesamte Volumen des Wärmetauschers 11 gewährleistet ist. Insbesondere sind in den ersten Strömungspfaden 15 und zweiten Strömungspfaden 23 Mittel vorgesehen, die eine Vergleichmäßigung des Mediumstromes in dem Wärmetauscher 11 bewirken bzw. verbessern können.

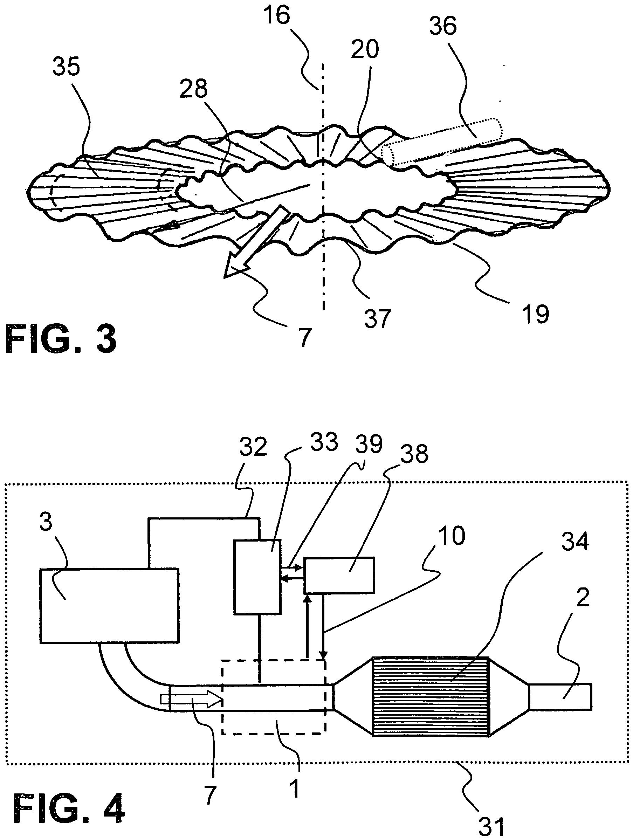

Fig. 3 zeigt schematisch in einer perspektivischen Ansicht eine Metallfolie 35 des Katalysatorkörpers 13, der insbesondere aus einer Vielzahl solcher aufeinander gestapelten Metallfolien hergestellt ist (hier nicht dargestellt). Durch die zumindest teilweise vorhandenen Strukturen 36 der Metallfolie 35 werden Strömungskanäle 36 in radialer Richtung 28 gebildet, durch die das Abgas 7, das entlang einer Mittelachse 16 in den Katalysatorkörper 13 einströmt, von einer inneren Umfangsfläche 20 zur äußeren Umfangsfläche 19 des Katalysatorkörpers 13 geleitet wird.

Fig. 4 veranschaulicht schematisch den bevorzugten Einsatzzweck einer solchen Komponente 1 in einem Kraftfahrzeug 31 mit einer Verbrennungskraftmaschine 3. Das in der Verbrennungskraftmaschine 3, bspw. einem Otto-Motor oder einem Diesel-Motor, erzeugte Abgas 7 strömt weiter in eine Abgasanlage 2. Dabei ist die Komponente 1 in vorteilhafter Weise der Verbrennungskraftmaschine 3 direkt nachgeschaltet. Sie kann Teil der Abgasanlage 2 selbst sein, ggf. aber auch Teil einer Abgasrückführung 32, bei der in besonders vorteilhafter Weise auf den Kühler 33 zurückgegriffen werden kann, indem der Temperaturgradient zwischen dem Medium 10 des Wärmetauschers 11 der Komponente 1 und einem Kühlmedium 39 des Kühlers 33 im Rahmen eines Thermoelektrischen Generators 38 als elektrische Energie nutzbar gemacht wird. Nach der Behandlung durch die Komponente 1 kann das Abgas 7 noch einer Abgasbehandlungseinheit 34 zugeführt werden, bevor es gereinigt an die Umgebung abgeleitet wird.

### Bezugszeichenliste

1 Komponente
2 Abgassystem
3 Verbrennungskraftmaschine
4 Gehäuse
5 Einlass
6 Auslass
7 Abgas
8 Einlauf
9 Auslauf
10 Medium
11 Wärmetauscher
12 Erste thermische Masse
13 Katalysatorkörper
14 Zweite thermische Masse
15 Erster Strömungspfad
16 Mittelachse
17 Erste Stirnseite
18 Zweite Stirnseite
19 Äußere Umfangsfläche
20 Innere Umfangsfläche
21 Ringkanal
22 Innenwand
23 Zweiter Strömungspfad
24 Axiale Erstreckung
25 Erste Stufe
26 Zweite Stufe
27 Erstes Kompensationselement
28 Radiale Richtung
29 Zweites Kompensationselement
30 Axiale Richtung
31 Kraftfahrzeug
32 Abgasrückfiihrung
33 Kühler
34 Abgasbehandlungseinheit
35 Metallfolie
36 Strömungskanäle
37 Strukturen
38 Thermoelektrischer Generator
39 Kühlmedium

## Patentansprüche

1. Komponente (1) eines Abgassystems (2) einer Verbrennungskraftmaschine (3), wobei die Komponente (1) zumindest ein Gehäuse (4) mit einem Einlass (5) und einem Auslass (6) für ein Abgas (7) sowie zumindest einen Einlauf (8) und einen Auslauf (9) für ein Medium (10) aufweist, wobei die Komponente (1) weiterhin einen von dem Abgas (7) umströmbaren Wärmetauscher (11) mit einer ersten thermischen Masse (12) und einen von dem Abgas (7) durchströmbaren Katalysatorkörper (13) mit einer zweiten thermischen Masse (14) aufweist, wobei der Wärmetauscher (11) mindestens einen ersten Strömungspfad (15) für das Medium (10) aufweist und wobei Wärmetauscher (11) und Katalysatorkörper (13) in dem Gehäuse (4) gemeinsam angeordnet sind, wobei das Gehäuse (4) eine Mittelachse (16) und entlang der Mittelachse (16) eine erste Stirnseite (17) und eine zweite Stirnseite (18) aufweist; wobei der Einlass (5) an der ersten Stirnseite (17) und der Auslass (6) an der zweiten Stirnseite (18) angeordnet ist, wobei der Katalysatorkörper (13) entlang der Mittelachse (16) angeordnet ist und eine äußere Umfangsfläche (19) und eine innere Umfangsfläche (20) aufweist, die sich parallel zu der Mittelachse (16) erstrecken und wobei die innere Umfangsfläche (20) mit dem Einlass (5) strömungstechnisch unmittelbar verbunden ist, so dass der Katalysatorkörper (13) radial von der inneren Umfangsfläche (20) zu der äußeren Umfangsfläche (19) von dem Abgas (7) durchströmbar ist, wobei weiter der zumindest eine erste Strömungspfad (15) den Katalysatorkörper (13) an der äußeren Umfangsfläche (19) zumindest teilweise umgibt; wobei ein Ringkanal (21) an einer Innenwand (22) des Gehäuses (4) vorgesehen ist, der strömungstechnisch mit der äußeren Umfangsfläche (19) des Katalysatorkörpers (13) und unmittelbar mit dem Auslass (6) verbunden ist und den Katalysatorkörper (13) und den zumindest einen ersten Strömungspfad (15) zumindest teilweise umgibt.

2. Komponente (1) nach Patentanspruch 1 , wobei zumindest ein zweiter Strömungspfad (23) vorgesehen ist, der den Katalysatorkörper (13) zumindest teilweise durchdringt.

3. Komponente (1) nach Patentanspruch 2, wobei der Wärmetauscher (11) wenigstens zweistufig ausgeführt ist und der außerhalb des Katalysatorkörpers (13) angeordnete zumindest eine erste Strömungspfad (15) einer ersten Stufe (25) und der den Katalysatorkörper (13) durchdringende zumindest eine zweite Strömungspfad (23) einer zweiten Stufe (26) des Wärmetauschers (11) zugeordnet sind.

4. Komponente (1) nach einem der Patentansprüche 2 oder 3, wobei der Katalysatorkörper (13) gegenüber dem zumindest einen zweiten Strömungspfad (23) des Wärmetauschers (11) erste Kompensationselemente (27) aufweist, die eine Ausdehnung des Katalysatorkörpers (13) in radialer Richtung (28) ermöglichen.

5. Komponente (1) nach einem der vorherigen Patentansprüche, wobei der Katalysatorkörper (13) zweite Kompensationselemente (29) aufweist, die eine Ausdehnung des Katalysatorkörpers (13) in axialer Richtung (30) ermöglichen.

6. Komponente (1) nach einem der vorherigen Patentansprüche, wobei wenigstens der zumindest eine erste Strömungspfad (15) und/oder der zumindest eine zweite Strömungspfad (23) eine katalytisch aktive Beschichtung aufweist.

7. Kraftfahrzeug (31), aufweisend eine Komponente (1) nach einem der vorhergehenden Patentansprüche.

8. Verfahren zum Betrieb einer Komponente (1) nach einem der Patentansprüche 1 bis 6, wobei der Wärmetauscher (11) zumindest zeitweise als Heizelement für den Katalysatorkörper (13) eingesetzt wird.

## Claims

1. A component (1) of an exhaust system (2) of an internal combustion engine (3), wherein the component (1) has at least one housing (4) with an inlet (5) and an outlet (6) for an exhaust gas (7) and at least one inflow (8) and one outflow (9) for a medium (10), wherein the component (1) also has a heat exchanger (11) around which the exhaust gas (7) can flow, said heat exchanger (11) having a first thermal mass (12) and a catalytic converter body (13) through which the exhaust gas (7) can flow, said catalytic converter body (13) having a second thermal mass (14), wherein the heat exchanger (11) has at least one first flow path (15) for the medium (10), and wherein the heat exchanger (11) and the catalytic converter body (13) are arranged together in the housing (4); wherein the housing (4) has a central axis (16) and a first end side (17) and a second end side (18) along the central axis (16); wherein the inlet (5) is arranged on the first end side (17), and the outlet (6) is arranged on the second end side (18); wherein the catalytic converter body (13) is arranged along the central axis (16) and has an outer circumferential face (19) and an inner circumferential face (20) which extend parallel to the central axis (16), and wherein the inner circumferential face (20) is fluidically connected directly to the inlet (5), with the result that the exhaust gas (7) can flow radially through the catalytic converter body (13) from the inner circumferential face (20) to the outer circumferential face (19); wherein in addition the at least one first flow path (15) at least partially surrounds the catalytic converter body (13) on the outer circumferential face (19); wherein an annular duct (21) is provided on an inner wall (22) of the housing (4), which annular duct (21) is fluidically connected to the outer circumferential face (19) of the catalytic converter body (13) and directly to the outlet (6), and at least partially surrounds the catalytic converter body (13) and the at least one first flow path (15).

2. The component (1) as claimed in claim 1, wherein at least one second flow path (23) is provided which at least partially penetrates the catalytic converter body (13).

3. The component (1) as claimed in patent claim 2, wherein the heat exchanger (11) is embodied at least in two stages and the at least one first flow path (15), which is arranged outside the catalytic converter body (13), is assigned to a first stage (25), and the at least one second flow path (23), which penetrates the catalytic converter body (13), is assigned to a second stage (26) of the heat exchanger (11).

4. The component (1) as claimed in one of patent claims 2 and 3, wherein the catalytic converter body (13) has, opposite the at least one second flow path (23) of the heat exchanger (11), first compensation elements (27) which permit the catalytic converter body (13) to expand in the radial direction (28).

5. The component (1) as claimed in one of the preceding patent claims, wherein the catalytic converter body (13) has second compensation elements (29) which permit the catalytic converter body (13) to expand in the axial direction (30).

6. The component (1) as claimed in one of the preceding patent claims, wherein at least the at least one first flow path (15) and/or the at least one second flow path have/has a catalytically active coating.

7. A motor vehicle (31), having a component (1) as claimed in one of the preceding patent claims.

8. A method for operating a component (1) as claimed in one of patent claims 1 to 6, wherein the heat exchanger (11) is used at least at certain times as a heating element for the catalytic converter body (13).

## Revendications

1. Composant (1) d'un système de gaz d'échappement (2) d'une machine à combustion interne (3), le composant (1) ayant au moins un boîtier (4) avec une ouverture d'admission (5) et une ouverture de sortie (6) pour un gaz d'échappement (7) ainsi qu'au moins une amenée (8) et une décharge (9) pour un médium (10), le composant (1) disposant en outre d'un échangeur de chaleur (11) autour duquel peut s'écouler le gaz d'échappement (7), avec une première masse thermique (12) et un corps de catalyseur (13) pouvant être traversé par le gaz d'échappement (7), le composant étant doté d'une deuxième masse thermique (14), l'échangeur de chaleur (11) ayant au moins un premier trajet d'écoulement (15) pour le médium (10) et l'échangeur de chaleur (11) et le corps de catalyseur (13) étant agencés communément dans le boîtier (4), le boîtier (4) ayant un axe médian (16) et le long de l'axe médian (16) une première face frontale (17) et une deuxième face frontale (18) ; l'ouverture d'admission (5) étant agencée sur la première face frontale (17) et l'ouverture de sortie (6) sur la deuxième face frontale (18) ; le corps de catalyseur (13) étant agencé le long de l'axe médian (16) et étant doté d'une surface circonférentielle extérieure (19) et d'une surface circonférentielle 20 intérieure qui s'étendent parallèlement à l'axe médian (16), et la surface circonférentielle intérieure (20) étant connectée directement par connexion de flux avec l'ouverture d'admission (5), de sorte que le corps de catalyseur (13) puisse être parcouru radialement par le gaz d'échappement (7) à partir de la surface circonférentielle intérieure (20) jusqu'à la surface circonférentielle extérieure (19); dans quel cas en outre l'au moins un premier trajet d'écoulement (15) entoure le corps de catalyseur (13) sur la surface circonférentielle extérieure (19) au moins partiellement; un canal annulaire (21) étant prévu sur une paroi intérieure (22) du boîtier (4), qui par technique d'écoulement est connecté avec la surface circonférentielle extérieure (19) du corps de catalyseur (13) et directement avec l'ouverture de sortie (6) et qui entoure le corps de catalyseur (13) et l'au moins un premier trajet d'écoulement (15) au moins partiellement.

2. Composant (1) selon la revendication 1, dans le cas duquel au moins un deuxième trajet d'écoulement (23) est prévu, qui pénètre au moins partiellement le corps de catalyseur (13).

3. Composant (1) selon la revendication 2, dans le cas duquel l'échangeur de chaleur (11) est réalisé au moins en deux étapes et l'au moins premier trajet d'écoulement (15) agencé à l'extérieur du corps de catalyseur (13), d'une première étape (25) et l'au moins un deuxième trajet d'écoulement (23) qui pénètre le corps de catalyseur (13) d'une deuxième étape (26) de l'échangeur de chaleur sont associés (11) à une deuxième étape (26) de l'échangeur de chaleur.

4. Composant (1) selon l'une des revendications 2 ou 3, le corps de catalyseur (13) ayant par rapport à l'au moins un deuxième trajet d'écoulement (23) de l'échangeur de chaleur (11) de premiers éléments de compensation (27) qui permettent une extension du corps de catalyseur (13) en direction radiale (28).

5. Composant (1) selon l'une des revendications précédentes, dans le cas duquel le corps de catalyseur (13) a deux éléments de compensation (29) qui permettent une extension du corps de catalyseur en direction axiale (30).

6. Composant (1) selon l'une des revendications précédentes, dans le cas duquel au moins l'au moins premier trajet d'écoulement (15) et/ou l'au moins un deuxième trajet d'écoulement. (23) a un revêtement à activité catalytique.

7. Véhicule automobile (31) comprenant un composant (1) selon l'une des revendications précédentes.

8. Procédé pour opérer un composant (1) selon l'une des revendications 1 à 6, dans le cas duquel l'échangeur de chaleur (11) est utilisé au moins temporairement comme élément de chauffage pour le corps de catalyseur (13).
